# EUROPÄISCHE PATENTSCHRIFT

(11) **EP 0 579 084 B1**
(45) Veröffentlichungstag und Bekanntmachung des Hinweises auf die Patenterteilung: **30.10.1996**
(21) Anmeldenummer: 93110733.8
(22) Anmeldetag: 05.07.1993
(51) Int. Cl.: B60K 7/00, B61C 9/46

(54) **Antriebsmotor**
Driving motor
Moteur de propulsion

(30) Priorität: 17.07.1992 DE 4223633
(43) Veröffentlichungstag der Anmeldung: 19.01.1994
(73) Patentinhaber: SIEMENS AKTIENGESELLSCHAFT, 80333 München (DE)
(72) Erfinder: Kempkes, Joachim, Dr., D-90451 Nürnberg (DE); Peters, Ludger, Dipl.-Ing., D-90610 Winkelhaid (DE); Pfannschmidt, Bernd, Dipl.-Ing. (FH), D-90574 Rosstal (DE)

(56) Entgegenhaltungen:
- EP-A- 0 337 032
- EP-A- 0 413 337
- EP-A- 0 463 168
- EP-A- 0 464 929
- EP-A- 0 492 290
- WO-A-94/01917
- DE-A- 3 538 513

## Beschreibung

Die Erfindung betrifft einen Antriebsmotor für ein Fahrzeugrad, das auf einem Achsstummel drehbar gelagert ist, wobei als Antriebsmotor ein Außenläufermotor vorgesehen ist, dessen Ständerblechpaket auf dem Achsstummel sitzt und dessen Außenläufer als Radträger ausgebildet ist.

Ein Antriebsmotor dieser Art ist Gegenstand des älteren Dokumentes WO-A-94/01917, das einen Stand der Technik nach Artikel 54 (3) und (4) EPÜ bildet. Hierbei ist an einem Fahrwerksholm des Fahrzeugs ein im wesentlichen becherförmigausgestalteter Lagerträger gehaltert und der Außenläufer ist axial außen an dem Achsstummel drehbar gelagert.

Ferner ist aus der EP-A-0 337 032 ein Antriebsmotor für ein Fahrzeugrad bekannt, das auf einem Achsstummel drehbar gelagert ist, wobei als Antriebsmotor ein Außenläufermotor vorgesehen ist. Bei dieser bekannten Anordnung hat das Magnetjoch des Rotors keine tragende Funktion für das Rad, da es nur zum Tragen des Permanentmagneten dient. Bei diesem Motor ist die Radscheibe als Radträger ausgebildet, an welche der Rotor seitlich angeschraubt wird.

Bei der Antriebseinheit für ein elektrisch angetriebenes Fahrzeug gemäß der EP-A-0 492 290 sitzt das Ständerblechpaket des Motors nicht direkt auf dem Achsstummel, sondern auf einem zusätzlichen, eigenen Träger, der an den Achsstummel angeschraubt ist. Außerdem ist der Außenläufer nicht als Radträger ausgebildet.

Durch die EP-A-0 413 337 ist ein elektromotorischer Direktantrieb für Schienenfahrzeuge bekannt, bei dem axial neben einem anzutreibenden Fahrzeugrad ein elektronisch kommutierter, gehäuseloser Elektromotor angeordnet ist. Der Elektromotor ist mit seinem Außenläufer ohne Zwischenschaltung eines Getriebes an der Achswelle des anzutreibenden Fahrzeugrades befestigt. Der bekannte Direktantrieb ist axial relativ breit, so daß die angetriebenen Fahrzeugräder einen entsprechend breiten Radkasten benötigen. Dadurch ist insbesondere bei Niederflur-Schienenfahrzeugen der Fahrgastraum im Bereich dieser Radkästen verengt.

In der DE-C-35 38 513 ist ferner ein elektromotorischer Radnabenantrieb für Schienenfahrzeuge beschrieben, bei dem der Radträger vom Ständergehäuseteil des Elektromotors gebildet wird. Die Rotorwelle des Elektromotors ist koaxial zum Einzelrad drehbar gelagert und axial außen über ein Planetengetriebe in Mitnahmeverbindung mit dem Einzelrad gestellt. Aufgrund seiner Kompaktheit benötigt der bekannte Radnabenantrieb nur kleine Radkästen, so daß bei Niederflur-Schienenfahrzeugen ein durchgehend niedriger Wagenboden realisiert werden kann. Der Radnabenantrieb gemäß der DE-C-35 38 513 erfordert wegen seines Getriebes jedoch Abdichtungsmaßnahmen sowie regelmäßigen Ölwechsel.

Aufgabe der vorliegenden Erfindung ist es, einen kompakten und wartungsfreundlichen Antriebsmotor für ein Fahrzeugrad zu schaffen, der bei gleicher Größe konstruktiv einfacher ist.

Die Aufgabe wird erfindungsgemäß durch die Merkmale des Anspruchs 1 gelöst. Der erfindungsgemäße Antriebsmotor ist als Radnabenantrieb ausgebildet, also über seinen Läufer ohne Zwischenschaltung eines Getriebes mit dem anzutreibenden, auf einem Achsstummel drehbar gelagerten Fahrzeugrad verbunden. Bei dem Antriebsmotor handelt es sich um einen Außenläufermotor, dessen Ständerblechpaket auf dem Achsstummel sitzt und dessen Außenläufer den Radträger für das anzutreibende Fahrzeugrad bildet. Ein Radnabenantrieb mit dem erfindungsgemäßen Antriebsmotor ist konstruktiv wesentlich einfacher aufgebaut und darüber hinaus sehr viel wartungsfreundlicher, da kein Getriebe erforderlich ist. Trotz des fehlenden Getriebes ist für den Radnabenantrieb gemäß der Erfindung kein größerer Bauraum erforderlich. Bei der Erfindung ist die Lagerung des Außenläufers des Antriebsmotors auch zugleich Lagerung des anzutreibenden Fahrzeugrades. Man erzielt dadurch eine Gewichtseinsparung, die immer dann von besonderem Vorteil ist, wenn der Läufer zu den ungefederten Massen gehört.

Der Lagerträger des Antriebsmotors kann für bestimmte Anwendungen - z.B. Grubenfahrzeuge - direkt am Wagenkasten des Schienenfahrzeugs gehaltert sein. Insbesondere bei Fahrzeugen des Nah- und Fernverkehrs ist der Lagerträger jedoch in einer Fahrwerksschwinge bzw. einem Fahrwerksholm oder in einer Drehgestellschwinge gehaltert.

Der erfindungsgemäße Antriebsmotor kann in vorteilhafter Weise entweder als permanentmagneterregte Synchronmaschine oder als Asynchronmaschine ausgebildet sein.

Weitere Vorteile und Einzelheiten der Erfindung ergeben sich aus der nachfolgenden Beschreibung von Ausführungsbeispielen anhand der Zeichnung und in Verbindung mit den Ansprüchen 2-9. Es zeigen:
- FIG 1: ein erstes Ausführungsbeispiel des erfindungsgemäßen Radnabenantriebs, wobei der Antriebsmotor als permanentmagneterregte Synchronmaschine ausgebildet ist,
- FIG 2: ein zweites Ausführungsbeispiel des erfindungsgemäßen Radnabenantriebs, wobei der Antriebsmotor als Asynchronmaschine ausgebildet ist.

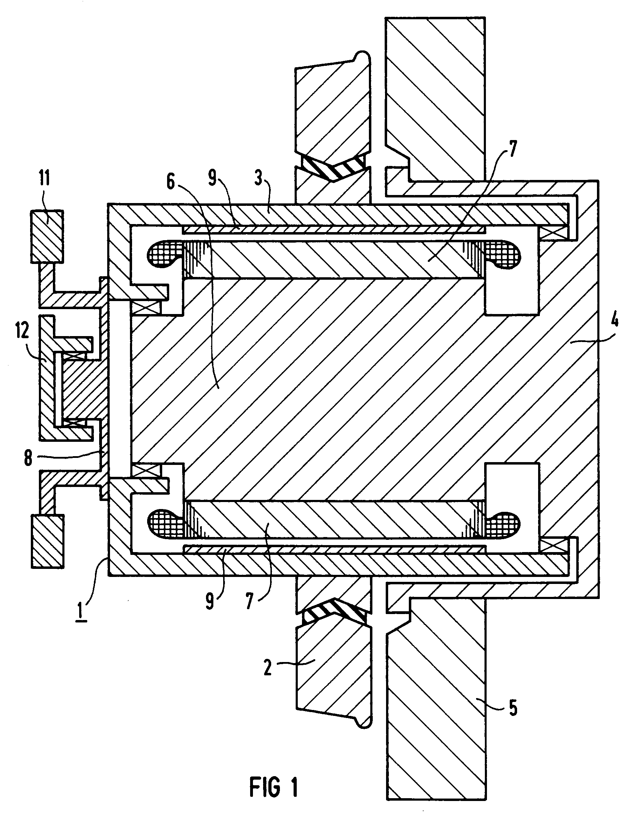

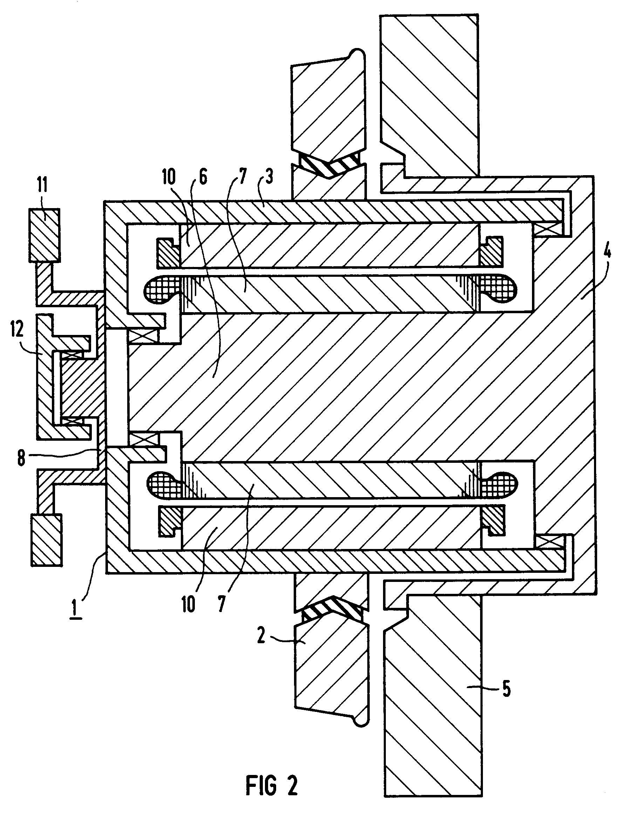

In den FIG 1 und 2 ist mit 1 ein Antriebsmotor für ein Fahrzeugrad 2 bezeichnet. Der Antriebsmotor 1 ist als Außenläufermotor ausgebildet. Der Außenläufer 3 des Antriebsmotors 1 ist als Radträger für das angetriebene Rad 2 ausgebildet.

In den in FIG 1 und 2 gezeigten Ausführungsbeispielen ist der Außenläufer 3 in einem im wesentlichen becherförmig ausgebildeten Lagerträger 4 drehbar gelagert. Der Lagerträger 4 ist an einer Drehgestellschwinge 5 derart gehaltert, daß der vollständig montierte Antrieb, bestehend aus dem Achsstummel 6 mit dem Ständerblechpaket 7, dem als Radträger ausgeführten Außenläufer 3 mit dem Rotorblechpaket 10 (in FIG 2) oder den Permanentmagneten 9 (in FIG 1) auch mit dem Radreifen und der evtl. noch zusätzlich angebauten Bremsscheibe 11 und dem Erdungstakt 12 axial von außen in die Schwinge 5 eingebaut oder axial nach außen aus der Schwinge 5 ausgebaut werden kann.

Am Lagerträger 4 ist ein Achsstummel 6 angeformt, auf dem das Ständerblechpaket 7 des Antriebsmotors 1 sitzt.

Der Außenläufer 3 ist sowohl axial innen am Lagerträger 4 als auch axial außen am Achsstummel 6 gelagert. Die Lagerung des Außenläufers 3 ist dann zugleich auch Lagerung des anzutreibenden Fahrzeugrades.

Die Innenseite des Außenläufers 3 sowie der Achsstummel 6 mit dem Ständerblechpaket 7 und die Lagerung sind durch einen Lagerdeckel 8 gegen Verschmutzung geschützt.

Die beiden Ausführungsformen in den FIG 1 und 2 unterscheiden sich dadurch, daß bei dem Außenläufermotor nach FIG 1 an der Innenseite des Außenläufers 3 Permanentmagnete 9 angeordnet sind, wohingegen an der Innenseite des Außenläufers 3 in FIG 2 ein Rotorblechpaket 10 vorgesehen ist.

## Patentansprüche

1. Antriebsmotor für ein Fahrzeugrad (2), das auf einem Achsstummel (6) drehbar gelagert ist, wobei als Antriebsmotor ein Außenläufermotor (1) vorgesehen ist, dessen Ständerblechpaket (7) auf dem Achsstummel (6) sitzt und dessen Außenläufer (3) als Radträger ausgebildet ist, wobei, an einem Wagenkasten, einer Fahrwerksschwinge, einem Fahrwerksholm oder in einer Drehgestellschwinge (5) des Fahrzeugs ein im wesentlichen becherförmig ausgebildeter Lagerträger (4) gehaltert ist und wobei der Außenläufer (3) axial innen im Lagerträger (4) und axial außen an dem im Lagerträger (4) angeordneten Achsstummel (6) drehbar gelagert ist.

2. Antriebsmotor nach Anspruch 1,
**dadurch gekennzeichnet**,
daß der Achsstummel (6) an dem Lagerträger (4) angeformt ist.

3. Antriebsmotor nach Anspruch 1,
**dadurch gekennzeichnet**,
daß an dem Außenläufer (3) axial außen ein Lagerdeckel (8) angeordnet ist, der das Ständerblechpaket (7) sowie den Achsstummel (6) an der axial äußeren Stirnseite zumindest teilweise abdeckt.

4. Antriebsmotor nach Anspruch 3,
**dadurch gekennzeichnet**,
daß der Lagerdeckel (8) abnehmbar ist.

5. Antriebsmotor nach Anspruch 1,
**dadurch gekennzeichnet**,
daß der Außenläufer (3) Permanentmagnete (9) aufweist und der Antriebsmotor als permanenterregter Synchronmotor ausgeführt ist.

6. Antriebsmotor nach Anspruch 1,
**dadurch gekennzeichnet**,
daß der Außenläufer (3) ein Rotorblechpaket (10) aufweist und der Antriebsmotor als Asynchronmotor ausgeführt ist.

7. Antriebsmotor nach einem der Ansprüche 1 bis 6,
**dadurch gekennzeichnet,**
daß der vollständig montierte Antrieb, bestehend aus dem Achsstummel (6) des Lagerträgers (4), mit dem Ständerblechpaket (7), dem als Radträger ausgeführten Außenläufer (3) mit dem Rotorblechpaket (10) oder den Permanentmagneten (9) axial von außen in die Drehgestellschwinge (5) einbaubar und axial nach außen aus der Drehgestellschwinge ausbaubar ist.

8. Antriebsmotor nach Anspruch 7,
**dadurch gekennzeichnet,**
daß der vollständig in axialer Richtung montier- und demontierbare Antrieb ferner auch das Fahrzeugrad (2) umfaßt.

9. Antriebsmotor nach Anspruch 7 oder 8,
**dadurch gekennzeichnet,**
daß der vollständig in axialer Richtung montier- und demontierbare Antrieb ferner eine angebaute Bremsscheibe (11) sowie einen Erdungskontakt (12) umfaßt.

## Claims

1. Drive motor for a vehicle wheel (2) which is rotatably mounted on an axle journal (6), whereby as drive motor an external-rotor motor (1) is provided, the laminated stator core (7) of which is disposed on the axle journal (6) and the external rotor (3) of which is constructed as a wheel support, whereby on a vehicle body, a chassis link, a chassis bar or in a bogie link (5) of the vehicle a bearing support (4) which is constructed substantially in the shape of a bowl is supported and whereby the external rotor (3) is rotatably mounted axially on the inside in the bearing support (4) and axially on the outside on the axle journal (6) arranged in the bearing support (4).

2. Drive motor according to claim 1, characterized in that the axle journal (6) is integrally moulded on the bearing support (4).

3. Drive motor according to claim 1, characterized in that on the external rotor (3) axially on the outside a bearing cover (8) is arranged which covers the laminated stator core (7) and the axle journal (6) on the axially outer front side at least in part.

4. Drive motor according to claim 3, characterized in that the bearing cover (8) can be removed.

5. Drive motor according to claim 1, characterized in that the external rotor (3) has permanent magnets (9) and the drive motor is designed as a permanently excited synchronous motor.

6. Drive motor according to claim 1, characterized in that the external rotor (3) has a laminated rotor core (10) and the drive motor is designed as an asynchronous motor.

7. Drive motor according to one of claims 1 to 6, characterized in that the completely assembled drive, comprising the axle journal (6) of the bearing support (4), with the laminated stator core (7), the external rotor (3) designed as wheel support with the laminated rotor core (10) or the permanent magnets (9), can be installed axially from the outside into the bogie link (5) and can be removed axially to the outside from the bogie link.

8. Drive motor according to claim 7, characterized in that the drive which can be assembled and dismantled completely in the axial direction also comprises the vehicle wheel (2).

9. Drive motor according to claim 7 or 8, characterized in that the drive which can be assembled and dismantled completely in the axial direction also comprises a built-on brake disc (11) and an earth terminal (12).

## Revendications

1. Moteur d'entraînement d'une roue (2) de véhicule ferroviaire, qui est montée en rotation sur une fusée d'essieu (6), un moteur (1) à rotor extérieur étant prévu en tant que moteur d'entraînement dont le paquet de tôles statoriques (7) est disposé sur la fusée d'essieu (6), et dont le rotor extérieur (3) est réalisé en tant que support de roue, un support de palier (4), qui est sensiblement en forme de godet étant fixé sur une caisse de véhicule, sur un bras oscillant de châssis, sur un longeron de châssis ou dans un bras oscillant (5) de boggie du véhicule, et le roteur extérieur (3) étant monté en rotation axialement à l'intérieur du support de palier (4) et axialement à l'extérieur de la fusée d'essieu (6) disposée dans le support de palier (4).

2. Moteur d'entraînement selon la revendication 1,
caractérisé par le fait que,
la fusée d'essieu (6) est issue du support de palier (4).

3. Moteur d'entraînement selon la revendication 1,
caractérisé par le fait que,
un couvercle de palier (8) est disposé axialement à l'extérieur sur le rotor extérieur (3) et recouvre, au moins partiellement, le paquet de tôles statoriques (7) ainsi que la fusée d'essieu (6) sur la face frontale axiale extérieure.

4. Moteur d'entraînement selon la revendication 3,
caractérisé par le fait que,
le couvercle de palier (8) est amovible.

5. Moteur d'entraînement selon la revendication 1,
caractérisé par le fait que,
le roteur extérieur (3) comporte des aimants permanents (9), et que le moteur d'entraînement est réalisé sous la forme d'un moteur synchrone à excitation permanente.

6. Moteur d'entraînement selon la revendication 1,
caractérisé par le fait que,
le rotor extérieur (3) comporte un paquet de tôles rotoriques (10), et que le moteur d'entraînement est réalisé sous la forme d'un moteur asynchrone.

7. Moteur d'entraînement selon l'une des revendications 1 à 6,
caractérisé par le fait que,
le dispositif d'entraînement complètement monté, qui est constitué de la fusée d'essieu (6) du support de palier (4) comportant le paquet de tôles statoriques (7) et du rotor extérieur (3) réalisé en tant que support de roue et comportant le paquet de tôles rotoriques (10) ou les aimants permanents (9), peut être inséré axialement à partir de l'extérieur dans le bras oscillant (5) de boggie, et retiré axialement vers l'extérieur du bras oscillant de boggie.

8. Moteur d'entraînement selon la revendication 7,
caractérisé par le fait que,
le dispositif d'entraînement, qui peut être complètement monté et démonté dans le sens axial, englobe en outre également la roue (2) du véhicule.

9. Moteur d'entraînement selon la revendication 7 ou 8,
caractérisé par le fait que,
l'entraînement, qui peut être complètement monté et démonté dans le sens axial, englobe en outre un disque de frein (11) rapporté ainsi qu'un contact de mise à la terre (12).
